# EUROPÄISCHE PATENTSCHRIFT

(11) **EP 1 309 517 B1**
(45) Veröffentlichungstag und Bekanntmachung des Hinweises auf die Patenterteilung: **26.10.2005**
(21) Anmeldenummer: 01967270.8
(22) Anmeldetag: 14.08.2001
(51) Int. Cl.: C02F 3/30, C02F 11/12, C02F 3/00, C02F 101/36

(54) **VERFAHREN ZUR REINIGUNG VON ABWASSER, UND KLÄRANLAGE ZUR DURCHFÜHRUNG DES VERFAHRENS**
METHOD FOR PURIFYING WASTE WATER, AND PURIFICATION PLANT FOR CARRYING OUT SAID METHOD
PROCEDE DE PURIFICATION D'EAUX USEES, ET STATION D'EPURATION SERVANT A METTRE UN OEUVRE LE PROCEDE

(30) Priorität: 16.08.2000 DE 10039932; 08.05.2001 DE 10122190
(43) Veröffentlichungstag der Anmeldung: 14.05.2003
(73) Patentinhaber: LORENZ, Günter, W-6382 Friedrichsdorf/Ts. (DE)
(72) Erfinder: LORENZ, Günter, W-6382 Friedrichsdorf/Ts. (DE)
(74) Vertreter: Glawe, Delfs, Moll
(86) Internationale Anmeldenummer: PCT/EP2001/009387
(87) Internationale Veröffentlichungsnummer: WO 2002/014227

(56) Entgegenhaltungen:
- EP-A- 0 019 733
- WO-A-88/06570
- WO-A-99/61378
- DE-A- 3 534 603
- PATENT ABSTRACTS OF JAPAN vol. 018, no. 176 (C-1183), 25. März 1994 (1994-03-25) -& JP 05 337496 A (MATSUSHITA ELECTRIC IND CO LTD), 21. Dezember 1993 (1993-12-21)

## Beschreibung

Die Erfindung betrifft ein Verfahren gemäss Anspruch 1 zur Reinigung von Abwasser durch anaerobe Behandlung (Faulung) in einer anaeroben Behandlungszone. Vorzugsweise wird das Verfahren angewendet zur Behandlung von hochkonzentriertem Problemabwasser, z.B. Sickerwasser aus einer Mülldeponie, welches in hohen Konzentrationen gelöste organische Verunreinigungen (CSB) sowie AOX (absorbierbare organische Halogenverbindungen) enthält und deshalb für die Einleitung in eine übliche kommunale Kläranlage mit aeroben Behandlungszonen nicht geeignet ist. Solche Problemabwässer können in einer anaeroben Behandlungszone (Faulungsreaktor bzw. Faulturm) einer wirksamen und wirtschaftlichen Eliminierung von CSB und AOX unterzogen werden.

Die Erfindung betrifft auch eine Kläranlage zur Durchführung des Verfahrens.

Die Erfindung ist anwendbar zum gleichzeitigen, getrennten Behandeln von kommunalem Abwasser und hochkonzentriertem Problemabwasser, insbesondere Deponie-Sickerwasser. Gewöhnliches, kommunales Abwasser aus Haushalt, Gewerbe oder Industrie wird in kommunalen Kläranlagen gereinigt, wobei der Abbau der gelösten Schmutzstoffe in einer aeroben biologischen Behandlungszone erfolgt. Diese kann insbesondere aus einem Belebungsbecken und/oder aus mit hoher bzw. mit niedriger Schlammbelastung betriebenen aeroben biologischen Reaktoren bestehen. In modernen Anlagen erfolgt zusätzlich zum Abbau der organischen Kohlenstoffverbindungen auch eine Stickstoffelimination durch Nitrifikation und Denitrifikation.

Aus EP 0 354 906 und WO 99/23038 sind Verfahren zur aeroben Abwasserreinigung bekannt, bei denen aus einem dem Belebungsbecken nachgeschalteten Nachklärbecken Rücklaufschlamm und Rücklaufwasser, die beide sauerstoffreich und nitrathaltig sind, einem der Belebungsstufe vorgeschalteten, von Abwasser durchflossenen Bereich, z.B. einem Vorklärbecken, oder dessen Zulaufstrecke, zugeführt werden, um dort eine Nitrifikation/Denitrifikation und/oder eine biologische Phosphor-Elimination zu initiieren.

Andererseits gibt es Problemabwässer mit einer so hohen Konzentration an gelösten Verunreinigungen, daß sie in den oben genannten kommunalen Kläranlagen nicht wirksam behandelt werden können. Ein Beispiel für solche Problemabwässer ist Sickerwasser aus einer Mülldeponie. Es ist bekannt, hochkonzentrierte Problemabwässer einer anaeroben Behandlung in einem Faulungsreaktor zu unterwerfen. Hierdurch können auch in hohen Konzentrationen vorliegende organische Verunreinigungen (CSB) anaerob-biologisch abgebaut werden, wobei nutzbares Methangas erzeugt wird. Auch in höhen Konzentrationen vorliegendes AOX wird wirtschaftlich anaerob-biologisch eliminiert. Eine Stickstoffelimination findet jedoch bei der anaerob-biologischen Behandlung nicht statt, so daß der aus dem Faulbehälter abgezogene Faulschlamm beziehungsweise das bei seiner Entwässerung anfallende Filtrat stark mit Ammoniak und anorganischen Stickstoffverbindungen belastet sind.

Das Dokument WO-A-99/61378 offenbart ein System zur Behandlung von kommunalem Abwasser, welches suspendierte, biologisch abbaubare Feststoffe enthält. Die Behandlung erfolgt in einem vertikal durchströmten Reaktor, der eine untere anaerobe Zone, eine mittlere mikroaerophile Zone und eine obere aerobe Zone aufweist. Die suspendierten Feststoffe sinken in die anaerobe Zone ab, wo sie anaerob unter Bildung von Gas und Faulschlamm abgebaut werden. Das Abwasser mit den gelösten Verunreinigungen strömt nach oben durch die mikroaerophile Zone in die aerobe Zone und wird vom Kopf des Reaktors als gereinigtes Wasser in Mischung mit aerobem Schlamm abgezogen. Sowohl Faulschlamm vom Boden des Reaktors als auch vom gereinigten Wasser abgetrennter aerober Schlamm können zum Abwasserzulauf zurückgeführt werden. Das Problem der Behandlung von hochkonzentriertem Problemabwasser tritt hierbei nicht auf.

Das Dokument Patent Abstracts of Japan vol. 018 Nr. 176 (c-1183) und JP 05337496 A beschreibt ein System zur Behandlung von Küchenabwasser und festen Abfällen. Das Küchenabwasser gelangt in einen Küchenwasser-Behandlungstank, in welchem es zuerst eine anaerobe Behandlungszone und anschließend eine aerobe Behandlungszone durchströmt. Die festen Abfälle werden mit aus der aeroben Behandlungszone entnommenem Schlamm und Wasser vermischt und mechanisch zerkleinert und dann in einem anaeroben Tank zur Verflüssigung der Festabfälle behandelt. Die aus dem anaeroben Tank entnommene Flüssigkeit wird dann zusammen mit dem Küchenabwasser dem Küchenabwasser-Behandlungstank zugeführt.

Aus EP 0 019 733 A1 ist ein Verfahren zur Abwasserbehandlung bekannt, bei dem das Abwasser eine aerobe Behandlungsstrecke mit Vorklärung, Belebtschlammbecken und Nachklärung durchläuft und sowohl der in der Vorklärung anfallende Frischschlamm als auch der in der Nachklärstufe anfallende und zusätzlich eingedickte Überschuß-Belebtschlamm in einer nachgeschalteten Faulanlage anaerob nachbehandelt wird. Ein Teil des in der Faulanlage anfallenden Faulschlamms wird maschinell entwässert und in die Faulanlage rezirkuliert, wobei die Menge und/oder der Eindickungsgrad des rezirkulierten Faulschlamms reguliert werden kann in Abhängigkeit von Betriebsparametem der Faulanlage, wie z.B. vom pH-Wert in der Faulungszone oder von der Zusammensetzung des Produktgases oder vom Feststoffgehalt des ausgefaulten Schlamms.

Die DE 3534603 A1 beschreibt ein Verfahren zur Weiterverarbeitung von aus einer biologischen Abwasserreinigungsanlage abgezogenem Rohschlamm in einer zweistufigen anaeroben Behandlungszone, wobei der der anaeroben Weiterbehandlung zugeführte Rohschlamm durch Eindickung und/oder Dekantierung auf einen vorgegebenen Trockensubstanzgehalt eingestellt wird.

Der Erfindung liegt die Aufgabe zugrunde, ein Verfahren zur anaeroben Behandlung von hochkonzentriertem Problemabwasser und vorzugsweise zur gleichzeitigen aeroben Behandlung von kommunalem Abwasser anzugeben, mit dem ein besonders wirksamer und weitgehender Abbau aller im Abwasser vorhandenen Verschmutzungskomponenten, insbesondere AOX, CSB und Stickstoff, sowie gegebenenfalls auch eine biologische Phosphor-Elimination, erzielt werden können und mit dem im Vergleich zu bisher bekannten Verfahren der bauliche Investitionsaufwänd, der Energieverbrauch und der Chemikalienbedarf erheblich verringert werden können.

Die mit dem erfindungsgemäßen Verfahren zu behandelnden Problemabwässer können in stark schwankenden Mengen anfallen. Dies kann zu Schwankungen in der Zusammensetzung und im Feststoffgehalt des Inhaltes der anaeroben Behandlungszone (Faulungszone) führen. Dies kann sich nachteilig auf den Faulungs- und Abbauvorgang in der anaeroben Behandlungszone auswirken, insbesondere wenn der Inhalt dieser Zone zu sehr verdünnt wird.

Der Erfindung liegt auch die Aufgabe zugrunde, ein Verfahren der angegebenen Art so auszugestalten, daß unabhängig von Zulaufschwankungen möglichst gleichbleibende Verhältnisse in der anaeroben Behandlungszone gewährleistet sind.

Die Aufgabe wird erfindungsgemäß gelöst mit dem in Anspruch 1 angegebenen Verfahren sowie mit der im Anspruch 3 angegebenen Kläranlage. Die abhängigen Ansprüche beziehen sich auf vorteilhafte weitere Ausgestaltungen des erfindungsgemäßen Verfahrens bzw. der erfindungsgemäßen Kläranlage.

Die Erfindung beruht auf dem Prinzip, der zur Behandlung des Problemabwassers vorgesehenen anaeroben Behandlungszone (Faulungsreaktor) aeroben Überschußschlamm aus einer aeroben Behandlungszone zuzuführen und dabei den Eindickungsgrad (d. h. den Feststoffgehalt) dieses Schlammes so einzustellen bzw. zu steuern, daß in der anaeroben Behandlungszone eine für die anaerobe Biozönose optimale Feststoffkonzentration aufrechterhalten wird. Insbesondere muß eine unerwünschte Verdünnung in der anaeroben Zone (Faulungsreaktor) vermieden werden.

In der Erfindung werden zwei parallel zueinander verlaufende Behandlungsstrecken zur aeroben Behandlung von kommunalem Abwasser einerseits und zur anaeroben Behandlung von Problemabwasser andererseits derart miteinander verknüpft, daß die anaerobe Behandlungsstrecke Überschußschlamm aus der aeroben Behandlungsstrecke aufnimmt und das bei der Schlammentwässerung in der anaeroben Behandlungsstrecke anfallende Filtrat in die aerobe Behandlungsstrecke eingeleitet wird. Die mit diesen Maßnahmen erzielten vorteilhaften Wirkungen werden in der nachfolgenden Beschreibung von Ausführungsbeispielen der Erfindung näher erläutert.
- Fig. 1: zeigt das Schema einer nach dem erfindungsgemäßen Verfahren betriebenen Abwasserbehandlungsanlage gemäß einer ersten Ausführungsform.
- Fig. 2: zeigt ein Schema der anaeroben Behandlungsstrecke der Abwasserbehandlungsanlage gemäß einer zweiten Ausführungsform.
- Fig. 3: zeigt das Schema einer Abwasserbehandlungsanlage gemäß einer dritten Ausführungsform der Erfindung.
- Fig. 4: zeigt das Schema einer weiter abgewandelten vierten Ausführungsform.

Soweit in den Zeichnungen übereinstimmende Bezugszeichen verwendet werden, sind damit gleiche Anlagenteile bezeichnet.

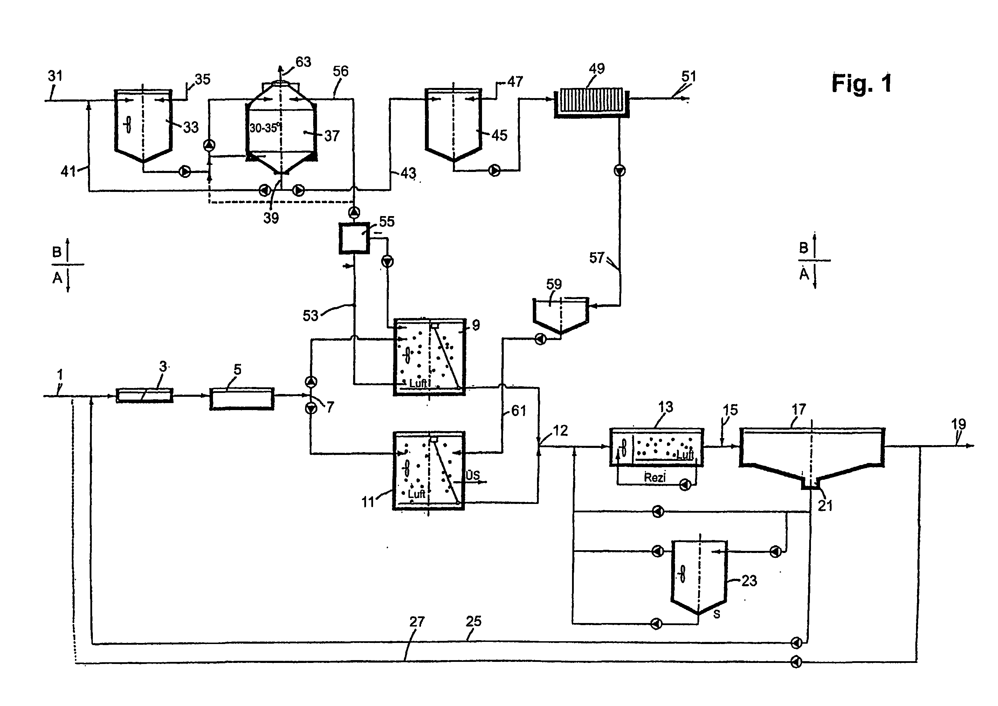

Die in Fig. 1 dargestellte Gesamtanlage besteht aus zwei Behandlungsstrecken mit getrennten Zuläufen, nämlich einer aeroben Behandlungsstrecke A (untere Hälfte) und einer anaeroben Strecke B (obere Hälfte der Zeichnung).

In der aeroben Behandlungsstrecke A fließt an einem Zulauf 1 kommunales Abwasser aus Haushalt, Gewerbe und/oder Industrie zu. Es gelangt über einen Rechen 3 zum Entfernen grober Fremdkörper und einem Sandfang 5 zu einem Verzweigungspunkt 7, von dem ein Teil des Abwasserstroms (z.B. 45 bis 60 %) einem biologischen aeroben Hochlastreaktor 9 und der restliche Teil (z.B. 40 bis 55 %) einem biologischen aeroben Niederlastreaktor 11 zugeführt wird. Der Hochlastreaktor 9 wird vorzugsweise mit einer Schlammbelastung B_{TS} > 0,6 (Kilogramm BSB₅ pro Kilogramm Schlammtrockengewicht) betrieben. Der Niederlastreaktor 11 wird vorzugsweise mit einer Schlammbelastung B_{TS} < 0,2 betrieben. In beiden Reaktoren 9, 11 erfolgt in erforderlichem Ausmaß eine Belüftung, z.B. durch Einblasen von Luft, und eine Umwälzung.

Bei den Reaktoren 9 und 11 kann es sich vorzugsweise um sogenannte SBR-Reaktoren (Sequencing Batch Reactor) handeln, die diskontinuierlich im Aufstaubetrieb betrieben werden. Nach Auffüllen des Reaktors mit einer bestimmten Menge Zulaufwasser wird dieses mit dem vorhandenen Schlamm gemischt, anschließend belüftet, dann der gebildete Belebtschlamm absetzen gelassen und das behandelte Wasser-und der Überschußschlamm getrennt abgezogen. Danach, ggf. unter Zwischenschaltung einer Stillstandsphase, beginnt eine erneute Auffüllung mit Zulaufwasser.

Aus den beiden Reaktoren 9 und 11 abgezogenes Wasser-Schlammgemisch wird bei 12 zusammengeführt und einer nachgeschalteten Belebungsstufe 13 zugeführt, die in konventioneller Weise mit niedriger Schlammbelastung (B_{TS} = 0,05 bis 0,1-0,2) und der nötigen Aufenthaltszeit betrieben wird. Aus dem Niederlastreaktor 11 bei 10 abgezogener Überschußschlamm kann dem Zulauf zur zweiten Belebungsstufe 13 zugeführt werden, um dort noch für die Nitrifikation bzw. Denitrifikation zur Verfügung zu stehen.

Aus dem Belebungsbecken 13 abgezogenes Schlamm-Wassergemisch, dem gegebenenfalls bei 15 Fällungschemikalien zugesetzt werden können, gelangt in ein Nachklärbecken 17, wo der Schlamm durch Sedimentation von dem Klarwasser getrennt wird, das bei 19 abgezogen wird. Der vom Schlammsumpf des Nachklärbeckens 17 abgezogene Schlamm wird zu einem überwiegenden Teil als Rücklaufschlamm zum Zulauf des Belebungsbeckens 13 zurückgeführt, und zwar wahlweise direkt oder über einen Schlammspeicher 23. Ein weiterer Teil des bei 21 abgezogenen Schlamms sowie ein Teil des bei 19 abgezogenen Reinwassers wird über Rücklaufleitungen 25, 27 zum Abwasserzulauf 1 zurückgeführt. Diese Schlamm- und Wasser-Rücklaufströme sind sauerstoff- und nitrifikantenreich und dienen dazu, bereits im Zulauf zu den aeroben biologischen Reaktoren 9, 11 eine Denitrifikation/Nitrifikation und/oder einen biologischen Phosphorabbau anzuregen.

Der anaeroben Behandlungsstrecke B fließt beim Zulauf 31 Problemabwasser mit hohen Konzentrationen an gelösten Verunreinigungen zu. Hierbei kann es sich insbesondere um Sikkerwasser aus einer Mülldeponie handeln, dem aber auch getrennt angeliefertes hochkonzentriertes Abwasser aus Industrie und Gewerbe beigemischt sein kann. Das bei 31 zulaufende Abwasser gelangt in einen Vorbehälter 33, wo es mit bei 35 zugeführten Chemikalien gemischt werden kann, z.B. polymeren Fällungsmitteln und/oder Neutralisationsmitteln. Aus dem Vorbehälter 33 gelangt das Abwasser in eine anaerobe Zone in Form eines Faulungsreaktors 37, wo durch anaerobe Faulung der Abbau der in hoher Konzentration enthaltenen Verunreinigungen erfolgt, typischerweise bei einer Temperatur von 30 - 35 %. Im Faulturm 37 sich absetzender Faulschlamm wird bei 39 abgezogen und kann teilweise über die Leitung 41 zum Vorbehälter 33 beziehungsweise zu dessen Einlauf zurückgeführt und mit dem zulaufenden Abwasser vermischt werden. Der Hauptteil des bei 39 abgezogenen Faulschlamms gelangt über die Leitung 43 in einen Nacheindicker 45, wo ihm über die Leitung 47 polymere Chemikalien zur Förderung der Entwässerung zugeführt werden können. In einer maschinellen Entwässerungsvorrichtung 49, wie z.B. Filterpresse oder Dekanter-Zentrifuge wird der Schlamm entwässert und der entwässerte Schlamm der endgültigen Entsorgung zugeführt.

Die aerobe bzw. anaerobe Behandlungsstrecke A und B sind erfindungsgemäß in der folgenden Weise verknüpft:

Im Hochlastreaktor 9 in erheblichen Mengen anfallender Überschußschlamm wird über die Leitung 53 abgezogen und über eine Zwischeneindickungsstufe 55, z.B. Siebbandpresse, Siebtrommel oder Dekanter, über die Leitung 56 in den Faulturm 37 eingeführt. Andererseits wird das bei der maschinellen Entwässerung 49 des Faulschlamms anfallende Filtrat über die Leitung 57 einem Zwischenspeicher 59 zugeführt, aus dem es zum Zwecke des Abbaus der in ihm enthaltenen Stickstoffverbindungen über die Leitung 61 in die aerobe Behandlungsstrecke A eingeleitet wird. Dies erfolgt vorzugsweise in Zeiten geringen Abwasserzulaufs, insbesondere zur Nachtzeit. Bei dem beschriebenen Ausführungsbeispiel mit Hochlastreaktor 9 und Niederlastreaktor 11 wird das hochkonzentriert amoniumhaltige Filtrat über die Leitung 61 in den aeroben Niederlastreaktor 11 eingeleitet, da im Hochlastreaktor 9 eine effektive Nitrifizierung wegen fehlender Nitrifikanten nicht möglich wäre.

Bezüglich der Dimensionierung der Anlage für einen typischen Anwendungsfall mit ca. 100.000 Einwohner-Gleichwerten (EW) sowie für typische Werte der in den Zuläufen enthaltenden Schmutzarten können die folgenden, nicht einschränkend zu verstehenden Zahlenbeispiele genannt werden, wobei Q_{M} die durchschnittliche Menge pro Tag bedeutet:
Für das bei 1 zulaufende kommunale Abwasser:
   Q_{M} = 18.300 m³/d
   AOX = 0,3-4,3 mg/l
   CSB = 780 mg/l
   N = 60 mg/l
   P = 10 mg/l
Für das bei 31 zulaufende Sickerwasser:
   Q_{M} = 60-100 m³/d
   AOX = 1,7-3,2 mg/l
   CSB = 3.400-8.400 mg/l
   N = 1.400-3100 mg/l
Für den bei 56 dem Faulturm zugeführten, eingedickten Überschußschlamm:
   Q_{M} = 80-160 m³/d
   AOX = 0,6-8,6 mg/l
   CSB = 1.500 mg/l
   N = 60-120 mg/l
   P = 20 mg/l
Für das bei 57 abgezogene Pressenwasser:
   Q_{M} = 70-120 m³/d
   AOX = 0,8 mg/l
   CSB = 750 mg/l
   N = 1.000mg/l
   P = 20 mg/l
   P = 20 mg/l

Vorbehälter 33 und Nacheindicker 45 können je ein Volumen von 550 m³ haben, das Fassungsvermögen des Faulturms beträgt vorzugsweise ca. 3.600 m³. Der bei 51 abgezogene entwässerte Schlamm kann in einer Menge Q_{M} = 35-70 m³/d anfallen. Die Menge des bei 53 abgezogenen Überschußschlamms kann vor der Eindickung in 55 ca. 500-1.000 m³/d betragen.

Von dem bei 21 aus dem Nachklärbecken abgezogenen Schlamm können ca. 13.000-16.000 m³/d direkt und ca. 4.500 m³/d über den Schlammspeicher 23 zum Einlauf des Belebungsbekkens 2 zurückgeführt werden. Über die Leitungen 25 und 27 können ca. 90-180 m³/d an Überschußschlamm und ca. 9.000-18.000 m³/d Rückführwasser zum Zulauf 1 der aeroben Behandlungsstrecke A zurückgeführt werden. Für das bei 19 aus der Kläranlage abgezogene geklärte Wasser können die folgenden Zahlenwerte gelten:
Q_{M} = 18.300 m³/d
AOX < 0,04 mg/l
CSB < 45 mg/l
N < 14 mg/l
P < 0,8 mg/l

Bezüglich der Hauptverunreinigungskomponenten der Abwasserzuläufe laufen die folgenden biologischen Abbauvorgänge ab: Der in dem bei 31 zulaufenden Problemabwasser enthaltene CSB (chemisch oxidierbare Inhaltsstoffe) wird, auch bei vorliegenden höchsten Konzentrationen (bis 0,5 Kilogramm pro Liter), im Faulturm 37 anaerob biologisch eliminiert. Hierbei wird Methangas in der Größenordnung von 1kWh pro kg CSB gewonnen, das über die Leitung 63 abgezogen und einer Nutzung zugeführt wird.

Ferner wird in dem bei 31 zulaufenden Problemabwasser enthaltenes AOX (absorbierbare organische Halogenverbindungen) anaerob-biologisch wirtschaftlich eliminiert, wobei die Konzentration von bis zu 60mg/l auf 1,0 bis 0,1 mg/l reduziert werden kann. Um AOX zu 90 % zu eliminieren, benötigt die Biozönose des Faulbehälters 37 eine Anpassungszeit von 150 bis 180 Tagen. Nach dieser Zeit läuft der Abbau bei einer Aufenthaltszeit im Faulbehälter von 14 bis 28 Tagen.

Ammonium und organischer Stickstoff werden im Faulbehälter 37 nicht abgebaut, sondern verbleiben zur Gänze im Faulschlamm. Bei der maschinellen Entwässerung in der Vorrichtung 49 bleibt ein kleiner Teil davon im Schlamm und wird ausgeschleust. Der Hauptanteil der Stickstoffverbindungen befindet sich in dem über die Leitung 57 abgezogenen Filtrat bzw. Pressenwasser. Dieses wird in den biologischen Niederlastreaktor 11 eingeleitet und dort zu ca. 70 % nitrifiziert und zu etwa 30 % denitrifiziert. Die vollständige Nitrifikation/Denitrifikation erfolgt dann in der nachgeschalteten Belebungsstufe 13. Auf diese Weise kann ein im wesentlichen vollständiger Abbau der in dem bei 31 zuströmendem Problemwasser enthaltenen Stickstoffverbindungen erzielt werden.

Der biologische Hochlastreaktor 9 dient dazu, den in dem bei 1 zuströmenden kommunalen Abwasser enthaltenen CSB abzufangen und einen ersten Teilabbau (ca. 70 %) vorzunehmen. Die in dem bei 1 zuströmenden kommunalen Abwasser enthaltene AOX-Fracht wird im Hochlastreaktor 9 zu etwa 50 bis 70 % in den entstehenden Überschußschlamm eingebunden und mit diesem dem Faulbehälter 37 zugeführt. In der anaeroben Behandlungsstrecke B wird somit auch die aus dem bei 1 zuströmenden kommunalen Abwasser stammende AOX-Fracht zu über 90 % abgebaut.

Diese Vorgänge führen zu einer stark vermehrten Erzeugung von Methangas im Faulbehälter 37, die bis zu 2,7 kWh pro kg CSB betragen kann, was das Vier- bis Fünffache der bisher üblichen Gaserzeugungsrate ist.

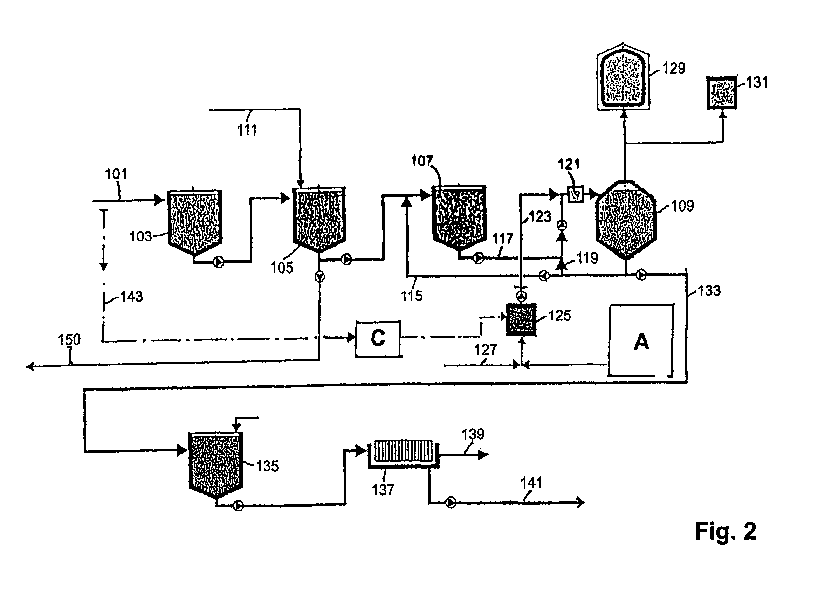

In Fig. 2 ist eine abgeänderte Ausführungsform der in Fig. 1 mit B bezeichneten anaeroben Behandlungsstrecke dargestellt.

An einem Zulauf 101 fließt Problemabwasser mit hohen Konzentrationen an gelösten Verunreinigungen zu. Hierbei kann es sich insbesondere um Sickerwasser aus einer Mülldeponie handeln, dem aber auch getrennt angeliefertes hochkonzentriertes Abwasser aus Industrie und Gewerbe beigemischt sein kann.

Das Abwasser gelangt über einen Zwischenspeicher 103, einen Chargenbehandlungsbehälter 105 und einen Aufbereitungsbehälter 107 in einen Faulturm bzw. Faulungsreaktor 109. Der Zwischenspeicher 103 dient hauptsächlich zur Abpufferung von kurzfristig sehr hohen Zulaufmengen im Zulauf 101. Im Chargenbehandlungsbehälter 105 können über eine Leitung 111 Chemikalien wie z.B. Natronlauge oder Kalkmilch zudosiert werden, um im Abwasser gelöste Schwermetalle, wie z.B. Chrom, auszufällen. Hierbei entstehender Überschußschlämm kann über eine Leitung 150 abgezogen und einer separaten Weiterbehandlung zugeführt werden. Damit ist eine saubere Abtrennung des chromhaltigen Schlamms möglich, der einer Sonderentsorgung zugeführt werden kann.

Im Aufbereitungsbehälter 107 wird das Abwasser mit Faulschlamm, der aus dem Faulturm entnommen und über die Leitung 115 zugeführt wird, im Verhältnis 1:0,2 bis 1:1 gemischt. Durch eine solche konzentrierte Animpfung wird in der Anfangsphase die Adaptionszeit für den Faulturm 109 sehr kurz gehalten. Bei Versuchen an einer Kläranlage der Größe 125000 EW wurde beobachtet, daß nach einer Adaptionszeit von ca. 180 d die Abbauleistung bezüglich AOX und CSB erheblich zunimmt.

Durch das ständige Zuführen von Biomasse in den Aufbereitungsbehälter 107 wird ein stationärer Zustand erreicht, der das vorhandene Wachstum der im Faulturm befindlichen Biomasse durch Biomassenentzug ausgleicht. Der Betrieb der Behälter 105 und 107 erfolgt vorzugsweise chargenweise, wobei jede Füllungs- und Behandlungscharge vorzugsweise einer Tagesmenge des zu behandelnden Wassers entspricht.

Das im Behälter 107 aufbereitete Abwasser- Faulschlamm-Gemisch gelangt über die Leitung 117 in den Faulbehälter 109, wobei ihm über die Leitung 119 weiterer Faulschlamm beigemischt werden kann und wobei eine Vorwärmung in einem Wärmetauscher 121 stattfinden kann.

Zusätzlich wird dem Faulbehälter 109 über die Leitung 123 aerober Überschußschlamm zugeführt, der aus einem aeroben Behandlungsbereich, z.B. einem Belebungsbecken oder aeroben Reaktor, einer kommunalen Kläranlage stammt, die in der Zeichnung pauschal und schematisch mit dem Block A angedeutet ist. Diese kommunale Kläranlage kann im Prinzip jede beliebige Ausgestaltung haben, beispielsweise diejenige, die in Fig. 1 für die aerobe Behandlungsstrecke A dargestellt ist.

Der Überschußschlamm aus der Kläranlage A wird mit einer maschinellen Entwässerungseinrichtung 125 entwässert bzw. eingedickt. Dabei wird der Entwässerungsgrad oder Eindikkungsgrad in Abhängigkeit von der bei 101 zuströmenden Abwassermenge gesteuert, wie noch näher erläutert wird. Bei der maschinellen Entwässerungseinrichtung 125 kann es sich z.B. um ein Bandfilter handeln. Über eine Leitung 127 können Entwässerungshilfsmittel, wie z.B. Polymer, zugemischt werden.

Das im Faulturm 109 durch die Faulung entstehende Faulgas (Methan) kann in einem Gasspeicher 129 gespeichert und einer wirtschaftlichen Verwendung z.B. zur Verbrennung in einem Blockheizkraftwerk 131 zur Erzeugung von Strom und Heizungswärme zugeführt werden.

Der aus dem Faulturm 109 abgezogene Faulschlamm wird, soweit er nicht über die Leitungen 115 und 119 rezirkuliert wird, über die Leitung 133 und über einen Vorlagebehälter 135 einer maschinellen Entwässerung z.B. in einer Kammerfilterpresse 137 zugeführt. Der entwässerte Schlamm kann bei 139 entnommen und einer Entsorgung bzw. Verwendung z.B. in der Landwirtschaft zugeführt werden. Das bei 141 abfließende Filtrat (Pressenwasser), in dem noch Verunreinigungen gelöst sind, die durch die anaerobe Behandlung im Faulturm 109 nicht abgebaut wurden, kann in die bei A angedeutete kommunale Kläranlage eingeleitet und damit einer Reinigung durch aerobe Behandlung zugeführt werden.

Die maschinelle Entwässerungseinrichtung 125 ist steuerbar, so daß der Eindickungsgrad, d.h. der Gehalt an Trockensubstanz (TS) des eingedickten Schlamms auf einen gewünschten Wert eingestellt werden kann. Hierzu dient eine schematisch bei C angedeutete Steuereinrichtung, die über eine Signalverbindung 143 Information über die Menge des bei 101 zulaufenden Abwassers (Sickerwassers) empfängt. Die Erfassung der Abwassermenge mittels geeigneter Meßeinrichtungen kann im Zulauf 101 oder auch bereits am Ort des Anfalls des Sikkerwassers, d. h. am Ort der Mülldeponie, erfolgen.

Wie bereits erläutert, hat die steuerbare Eindickung des Überschußschlamms in der Entwässerungseinrichtung 125 hauptsächlich den Zweck, eine unerwünschte Verdünnung des Inhalts des Faulturms 109 zu vermeiden, d.h. die Feststoffkonzentration (Trockensubstanz TS) im Faulturm 109 möglichst konstant auf einem gewünschten Betriebswert zu halten und jedenfalls zu vermeiden, daß die Feststoffkonzentration auf Dauer unter einen Mindestwert absinkt. Dies wird im folgenden näher erläutert anhand eines auf einen typischen Anwendungsfall zutreffenden Zahlenbeispiels, das jedoch in keiner Weise als beschränkend angesehen werden soll.

Es sei angenommen, daß von einer Mülldeponie Sickerwasser in schwankenden Tagesmengen anfällt, wobei typische Werte der Tagesmenge bei 100 m³/d, 60 m³/d oder 120 m³/d liegen können. Von Sickerwasser mitgeführte ungelöste Feststoffe sind gering und liegen in der Größenordnung von 1 g/l. Betriebserfahrungen haben gezeigt, daß die Feststoffkonzentration im Faulturm 109 nicht unter 30 g/l und vorzugsweise im Bereich von 40 g/l liegen sollte. Die Tabelle 1 zeigt, wie die Menge (Zeile 4) und der Feststoffgehalt (Zeile 5) des von der maschinellen Entwässerungseinrichtung 125 gelieferten Überschußschlamms eingestellt bzw. gesteuert wird, um trotz der schwankenden Tagesmengen an Sickerwasser eine weitgehend konstant bleibende Tagesmenge an zugeführten Feststoffen zu erzielen, und damit den Feststoffgehalt im Faulturm 109 in der Nähe des optimalen Wertes von ca. 40 g/l zu halten.

Wie in Tabelle 1 für die drei angenommenen Fälle 1, 2, 3 mit Sickerwasser-Tagesmengen von 100 bzw. 60 bzw. 120 m³/d gezeigt, wird die Menge des zugegebenen Überschußschlamms (Zeile 4) entsprechend angepaßt, so daß die gesamte, dem Faulturm 109 zugeführte Menge an Schlamm und Sickerwasser in allen drei Fällen konstant 180 m³/d beträgt (Zeile 7). Gleichzeitig wird auch der Eindickungsgrad der Entwässerungseinrichtung 125, d.h. der Feststoffgehalt des eingedickten Schlamms so variiert (Zeile 5 der Tabelle), daß die gesamte Feststoffmenge im hinzugeführten Schlamm (Zeile 6) konstant bei ca. 7200 kg liegt. Damit ergibt sich für das dem Faulturm 109 zugefügte Schlamm-Sickerwasser-Gemisch ein annähernd konstanter Feststoffgehalt (Zeile 9) im Bereich zwischen 40 und 41 g/l.

Wie aus Tabelle 1 ersichtlich, liegt der Eindickungsgrad, d.h. der Feststoffgehalt des eingedickten Überschußschlamms (Zeile 5) typischerweise im Bereich zwischen 60 und 120 g/l. Dieser hohe Feststoffgehalt hat weitere Vorteile. Z.B. sinkt mit steigendem Feststoffgehalt die Gefahr, daß durch die biologische Reinigung eliminiertes und in den Schlammfeststoffen enthaltenes Phosphor sich erneut sich im Wasser löst (Verringerung der P-Rücklösung). Auch ergeben sich allgemein durch höhere Feststoffgehalte bzw. geringere Schlamm-Mengen verlängerte Aufenthaltszeiten in der Faulzone.

Die erfindungsgemäße, in Anpassung an den Sickerwasseranfall gesteuerte maschinelle Eindickung des Überschußschlamms hat somit unter anderem folgende Vorteile:
a) steuerbare Einstellung des Eindickgrades
b) längere Aufenthaltszeiten im Faulbehälter
c) verbesserter AOX- und CSB-Abbau
d) Verringerung der P-Rücklösung, somit erhöhte biologische P-Elimination
e) dadurch höherer Anfall an Methangas sowie bessere Reinigung des Sickerwassers
f) der Einsatz von Fällungsmittel kann reduziert werden
g) durch höhere Feststoffgehalte kleinere Schlammvolumina
h) dadurch geringere Entsorgungskosten

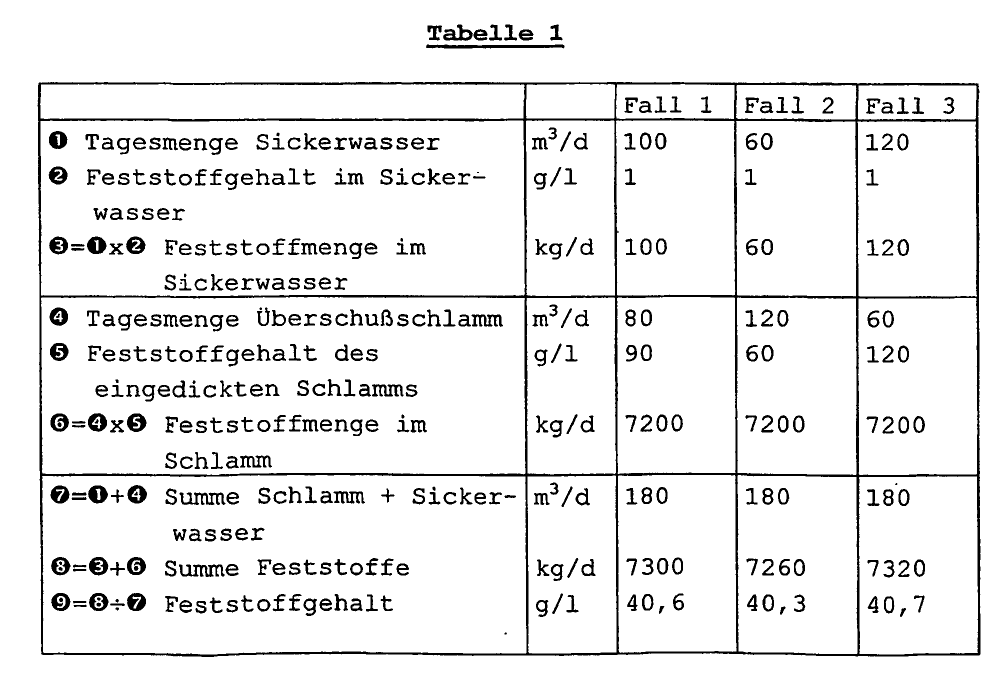

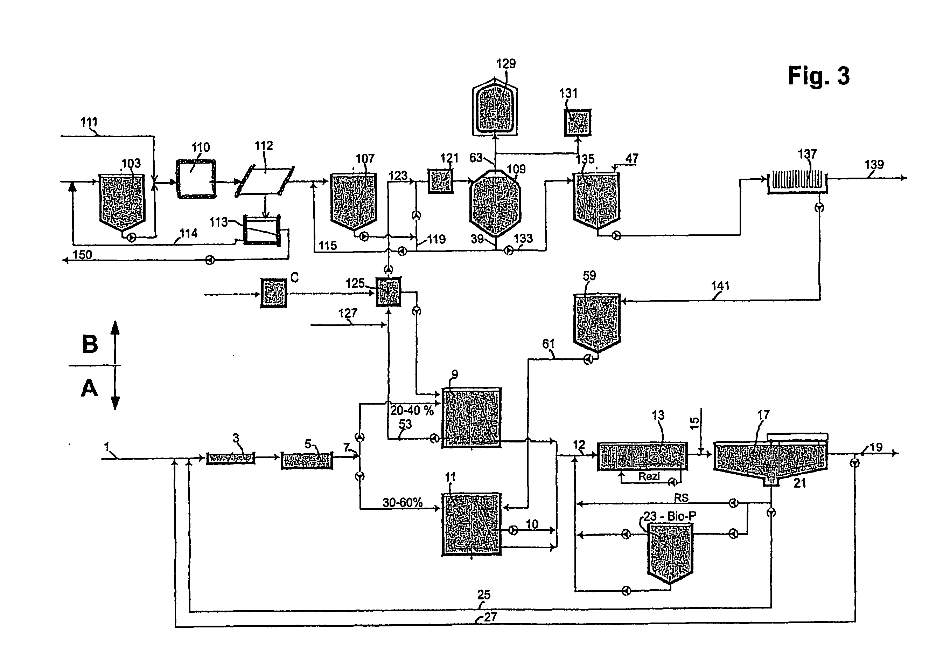

Bei der in Fig. 3 als drittes Ausführungsbeispiel schematisch gezeigten Abwasserkläranlage hat der im unteren Teil dargestellte aerobe Zweig A den gleichen Aufbau, wie bereits in Fig. 1 dargestellt, so daß auf eine Wiederholung der Beschreibung verzichtet werden kann. Der im oberen Teil von Fig. 3 dargestellte anaerobe Zweig B hat weitgehend den gleichen Aufbau wie in Fig. 2 dargestellt, so daß auch insoweit auf die zu Fig. 2 gegebene Beschreibung verwiesen werden kann. Abweichend von Fig. 2 sind folgende Komponenten des anaeroben Zweiges B von Fig. 3 ausgestaltet:

Zwischen dem Zwischenspeicher 103 und dem Aufbereitungsbehälter 107 befindet sich anstelle des in Fig. 2 gezeigten Chargenbehandlungsbehälters 105 ein Durchlaufreaktor 110 mit einem Fassungsvermögen von z.B. 40 m³, gefolgt von einem Lamellenabscheider 112. In dem Durchlaufreaktor 110 erfolgt durch ein über die Leitung 111 zugeführtes Fällungsmittel eine Austeilung von im Abwasser enthaltenen Verbindungen, insbesondere von Schwermetallen. Die durch die Fällung gebildeten Flocken werden in Lamellenseparator 112 abgetrennt und einem Entwässerungscontainer 113 zur weiteren Eindickung zugeführt. Das im Entwässerungscontainer 113 abgetrennte Trübwasser kann über die Leitung 114 zum Einlaufzwischenspeicher 103 zurückgeführt werden, während der eingedickte Fällungsszhlamm aus dem Entwässerungscontainer 113 über eine Leitung 150 abgezogen und z.B. als Überschußschlamm in den aeroben Anlagenteil A an geeigneter Stelle eingeleitet und dort weiterbehandelt werden kann.

Mit der chemischen Fällung entweder in dem Chargen-Fällungsbehälter 105 gemäß Fig. 2 oder in dem Durchlauf-Fällungsreaktor 110 von Fig. 3 werden vor allem Schwermetalle durch chemische Fällung aus dem Abwasser entfernt, so daß die heutigen, sehr niedrigen Grenzwerte für Schwermetalle im Ablauf der Kläranlage eingehalten werden können. Diese Grenzwerte liegen gemäß neuerer Verwaltungsvorschrift bei 0,05 mg/l für Quecksilber, 0,1 mg/l für Cadmium, jeweils 0,5 mg/l für Chrom, Nickel, Blei und Kupfer und 2,0 mg/l für Zink.

Ferner ist die Kläranlage gemäß Fig. 3 auch in ihrem aeroben Anlagenteil A auf möglichst wirksame biologische Stickstoffelimination und Phosphorelimination ausgelegt, die beide im Belebungsbecken 13 erfolgen. Zusätzlich trägt die Verweilzeit eines Teils des Rücklaufschlamms im Schlammspeicher 23 zur biologischen Phosphorelimination bei.

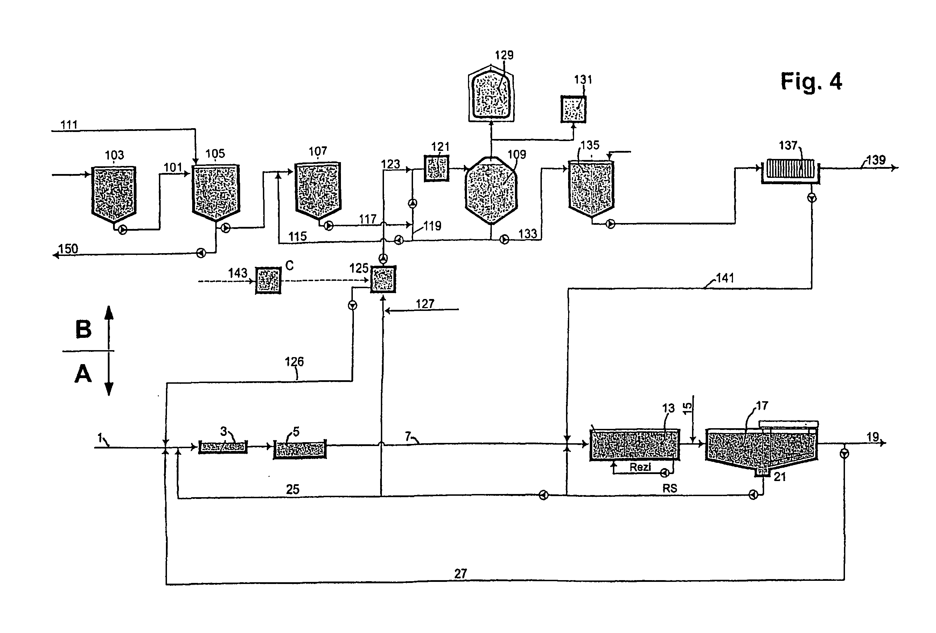

Bei dem in Fig. 4 dargestellten Anlagenschema hat die im oberen Teil dargestellte anaerobe Behandlungstrecke B die gleiche Anordnung wie bereits anhand von Fig. 2 dargestellt und beschrieben. Für den unteren Teil von Fig. 4 gezeigten aeroben Behandlungszweig A ist eine von Fig. 1 und 3 abweichende, vereinfachte Bauweise vorgesehen. Die in Fig. 1 dargestellten aeroben Hochlast- bzw. Niederlastreaktoren 9 und 11 sind in Fig. 4 weggelassen. Das bei 1 zugeführte kommunale Abwasser wird aus dem Sandfang 5 bzw. einem (nicht dargestellten) Vorklärbecken direkt über die Leitung 7 in das Belebungsbecken 13 eingeleitet, in welchem die gesamte aerobe Reinigung einschließlich biologischer Denitrifikation und Phosphorelimination stattfindet.

Weitere Unterschiede der Ausführungsform gemäß Fig. 4 gegenüber Fig. 1 bestehen darin, daß das bei der Faulschlammentwässerung anfallende Pressenwasser über die Leitung 141 dem Einlauf des Belebungsbeckens 13 zugeführt wird. Ferner wird das Filtrat, das bei der Entwässerung des dem Faulbehälter 109 zuzuführenden Überschußschlamms in der Entwässerungseinrichtung 125 anfällt, über die Leitung 126 dem Abwasserzulauf 1 zugeführt.

Bei der Anlage gemäß Fig. 4 wird im Vergleich zu den Anlagen gemäß Fig. 1 und Fig. 3 eine geringere biologische Reinigungsleistung für Stickstoff und Phosphor in Kauf genommen.

Die Erfindung ist nicht auf die Einzelheiten der dargestellten Ausführungsformen beschränkt. Vielmehr können die in den Zeichnungen dargestellten Anordnungen, und zwar jeweils unabhängig voneinander die aerobe Behandlungsstrecke A und/oder die anaerobe Behandlungsstrecke B, in vielfacher Weise abgeändert werden, ohne von dem durch die Ansprüche definierten Erfindungsgedanken abzuweichen.

## Patentansprüche

1. Verfahren zum Behandeln zweier unterschiedlicher Abwässer, nämlich einerseits von kommunalem Abwasser und andererseits von hochkonzentriertem Problemabwasser, das wegen seiner hohen Konzentration an gelösten Verunreinigungen für die Behandlung in einer aeroben Behandlungszone einer Kläranlage nicht geeignet ist, wie z. B. Sickerwasser aus einer Mülldeponie, mit folgenden Schritten:
- Das kommunale Abwasser wird einer aeroben Behandlungszone (9, 11, 13) einer Abwasserkläranlage (A) zugeführt und in dieser unter Bildung von Überschussschlamm aerob behandelt;
- das Problemabwasser wird einer anaeroben Behandlungszone (37, 109) (Faulungsreaktor) zugeführt und in dieser einem anaerobischen biologischen Abbau der gelösten Inhaltsstoffe unter Bildung von Faulschlamm und Faulgas unterworfen;
- der anaeroben Behandlungszone wird zusätzlich Schlamm zugeführt, der aus der aeroben Behandlungszone (9, 11, 13) als Überschussschlamm entnommen und vor der Einleitung in die anaerobe Behandlungszone (37; 109) maschinell entwässert wird;
- der Entwässerungsgrad und die Menge des der anaeroben Behandlungszone zugeführten Schlamms wird in Abhängigkeit von der Menge des der anaeroben Behandlungszone (37, 109) zugeführten Problemabwassers so eingestellt oder gesteuert, dass die Feststoffkonzentration in der anaeroben Behandlungszone (37, 109) möglichst konstant auf einem Wert gehalten wird, der in der Nähe des für die anaerobe Biozönose optimalen Wertes liegt.

2. Verfahren nach Anspruch 1, bei dem aus der anaeroben Behandlungszone (37; 109) entnommener Faulschlamm entwässert und das Filtrat aus der Faulschlammentwässerung zum Zwecke des Stickstoffabbaus einer aeroben Behandlungszone (11, 13) der Abwasserkläranlage (A) zugeführt wird.

3. Abwasserkläranlage, insbesondere zur Durchführung des Verfahrens nach Anspruch 1 oder 2, mit
- einem ersten Zulauf (1) und einem zweiten Zulauf (31, 101), über die zwei Abwässer unterschiedlicher Herkunft zuströmen, nämlich kommunales Abwasser am ersten Zulauf (1) und hochkonzentriertes Problemabwasser, wie z.B. Sickerwasser aus einer Mülldeponie, am zweiten Zulauf (31, 101);
- mindestens einer mit Abwasser aus dem ersten Zulauf (1) beaufschlagten aeroben Behandlungszone (9, 11, 13);
- mindestens einer mit Abwasser aus dem zweiten Zulauf (31, 101) beaufschlagten anaeroben Behandlungszone (37, 109);
- Mitteln zur Entnahme von Schlamm aus der mindestens einen aeroben Behandlungszone (9), einer maschinellen Entwässerungseinrichtung (55, 125) zum Entwässern des Schlamms, und Mitteln zum Zuführen des entwässerten Schlamms in die anaerobe Behandlungszone (37, 109);
- Mitteln zum Einstellen oder Steuern des Entwässerungsgrades der maschinellen Entwässerungsvorrichtung (55, 125) in Abhängigkeit von der Menge des am zweiten Zulauf (31, 101) zuströmenden Problemabwassers.

4. Kläranlage nach Anspruch 3, bei der die mindestens eine aerobe Behandlungszone eine mit hoher Schlammbelastung betriebene Hochlastzone (9) und eine mit geringerer Schlammbelastung betriebene Niederlastzone (11) aufweist, und daß der über die maschinelle Entwässerungseinrichtung (55, 125) der anaeroben Zone (37, 109) zugeführte Schlamm aus der Hochlastzone (9) entnommen wird.

5. Kläranlage nach Anspruch 3 oder 4, mit
- Mitteln zum Abziehen von Faulschlamm aus der anaeroben Behandlungszone (37, 109);
- einer Einrichtung (49, 137) zur maschinellen Entwässerung des Faulschlamms und
- Mitteln zur Zuführung des bei der Entwässerung des Faulschlamms anfallenden Filtrats zu mindestens einer mit dem Abwasser aus dem ersten Zulauf (1, 101) beaufschlagten aeroben Behandlungszone (11, 13).

6. Kläranlage nach einem der Ansprüche 3 bis 5, bei der zwischen dem zweiten Zulauf (101) und der anaeroben Behandlungszone (109) (Faulungsreaktor) eine Fällungszone (105; 110, 112, 113) zur chemischen Ausfällung von Abwasserinhaltsstoffen, insbesondere von Schwermetallen vorgesehen ist.

## Claims

1. Method for treating waste water of two different types, namely municipal waste water on the one hand and on the other hand highly concentrated problematic waste water which due to its high concentration of dissolved impurities is unsuitable for treatment in an aerobic treatment zone of a sewage plant, for example seepage water from a refuse dump, comprising the following steps:
- the municipal waste water is supplied to an aerobic treatment zone (9, 11, 13) of a waste water purification plant (A) and is aerobically treated therein while forming surplus sludge;
- the problematic waste water is supplied to an anaerobic treatment zone (37, 109) (digestion reactor) and therein subjected to an anaerobic biologic degradation of the dissolved contents while forming digested sludge and digestion gas;
- sludge is additionally supplied to said anaerobic treatment zone, said sludge being withdrawn as surplus sludge from said aerobic treatment zone (9, 11, 13) and being mechanically dewatered before being fed into the anaerobic treatment zone (37; 109);
- the degree of dewatering and the amount of the sludge supplied to the anaerobic treatment zone is adjusted or controlled in dependency on the amount of the problematic waste water supplied to the anaerobic treatment zone (37, 109) in such a way that the concentration of solids in the anaerobic treatment zone (37, 109) is kept substantially constant at a value which is close to the value that is optimal for the anaerobic biocoenosis.

2. Method according to claim 1, in which digested sludge that is taken from the anaerobic treatment zone (37; 109) is dewatered and the filtrate from the sludge dewatering is sent to an aerobic treatment zone (11, 13) of the waste water purification plant (A) for the purpose of nitrogen degradation.

3. Waste water purification plant, in particular for carrying out the method according to one of the claims 1 or 2, comprising
- a first admission inlet (1) and a second admission inlet (31, 101), through which two waste waters of various origins enter, namely municipal waste water at the first admission inlet (1) and highly concentrated problematic waste water, such as for example seepage water from a refuse dump, at the second admission inlet (31, 101);
- at least one aerobic treatment zone (9, 11, 13) that is charged with waste water from the first admission inlet (1);
- at least one anaerobic treatment zone (37, 109) that is charged with waste water from the second admission inlet (31, 101);
- means for the removal of sludge from said at least one aerobic treatment zone (9), a mechanical dewatering device (55, 125) for dewatering the sludge, and means for sending the dewatered sludge into the anaerobic treatment zone (37, 109);
- means for adjusting or controlling the degree of dewatering of the mechanical dewatering device (55, 125) in dependency on the amount of the problematic waste water entering at the second admission inlet (31, 101).

4. Purification plant according to claim 3, in which the at least one aerobic treatment zone comprises a high-load zone (9) operated with high sludge loading and a low-load zone (11) operated with less sludge loading, and in which the sludge that is sent to the anaerobic zone (37, 109) via the mechanical dewatering device (55, 125) is taken from said high-load zone (9).

5. Purification plant according to claim 3 or 4, comprising
- means for withdrawing digested sludge from the anaerobic treatment zone (37, 109);
- a device (49, 137) for the mechanical dewatering of the digested sludge, and
- means for sending the filtrate obtained by dewatering of the digested sludge to at least one aerobic treatment zone (11, 13) that is charged with the waste water from the first admission inlet (1, 101).

6. Purification plant according to one of the claims 3 through 5, in which a precipitation zone (105; 110, 112, 113) for the chemical precipitation of waste water contents, heavy metals in particular, is provided between the second admission inlet (101) and the anaerobic treatment zone (109) (digestion reactor).

## Revendications

1. Procédé de traitement de deux eaux usées différentes, en l'occurrence d'une part d'eaux usées communales et d'autre part d'eaux usées problématiques à haute concentration qui, à cause de leur haute concentration en polluants dissous, ne conviennent pas pour un traitement dans une zone de traitement aérobie d'une station d'épuration, comme par exemple des eaux d'infiltration dans une décharge publique, avec les étapes suivantes :
L'eau communale est acheminée à une zone de traitement aérobie (9, 11, 13) d'une station d'épuration des eaux usées (A) et traitée dans celle-ci de façon aérobie moyennant la formation d'un excès de boue ;
l'eau problématique est acheminée dans une zone de traitement anaérobie (37, 109) (réacteur de putréfaction) et est soumise dans celle-ci à une décomposition biologique anaérobie des composants dissous moyennant formation de boue putréfiée et de gaz de curage ;
dans la zone de traitement anaérobie est amenée en plus de la boue qui a été prélevée comme boue en excès dans la zone de traitement aérobie (9, 11, 13) et qui est déshydratée mécaniquement avant l'introduction dans la zone de traitement anaérobie (37, 109) ;
le degré de déshydratation et la quantité de la boue acheminée dans la zone de traitement anaérobie sont réglés ou régulés en fonction de la quantité d'eau usée problématique acheminée dans la zone de traitement anaérobie (37, 109) de telle sorte que la concentration en solide dans la zone de traitement anaérobie (37, 109) est maintenue de manière aussi constante que possible à une valeur qui est au voisinage de la valeur optimale pour la biocénose anaérobie.

2. Procédé selon la revendication 1, pour lequel la boue putréfiée prélevée de la zone de traitement anaérobie (37, 109) est déshydratée et pour lequel le filtrat de la déshydratation est acheminé pour dégradation de l'azote dans une zone de traitement aérobie (11, 13) de la station d'épuration des eaux usées (A).

3. Station d'épuration des eaux usées, en particulier pour l'exécution du procédé selon la revendication 1 ou 2, avec
une première alimentation (1) et une deuxième alimentation (31, 101), par lesquelles affluent deux eaux usées de provenance différente, en l'occurrence des eaux usées communales par la première alimentation (1) et des eaux usées problématiques à haute concentration, comme par exemple des eaux d'infiltration dans une décharge publique, par la deuxième alimentation (31, 101) ;
au moins une zone de traitement aérobie (9, 11, 13) alimentée en eau usée de la première alimentation (1) ;
au moins une zone de traitement anaérobie (37, 109) alimentée en eau usée de la deuxième alimentation (31, 101) ;
des moyens de prélèvement de la boue depuis l'au moins une zone de traitement aérobie (9), un dispositif de déshydratation mécanique (55, 125) pour la déshydratation de la boue, et des moyens pour acheminer la boue déshydratée dans la zone de traitement anaérobie (37, 109) ;
des moyens pour le réglage ou la régulation du degré de déshydratation du dispositif de déshydratation mécanique (55, 125) en fonction du débit de l'eau usée problématique affluant par la deuxième alimentation (31, 101).

4. Station d'épuration des eaux usées selon la revendication 3, pour laquelle l'au moins une zone de traitement aérobie comporte une zone de charge élevée (9), exploitée avec une haute charge de boue, et une zone de charge basse (11) exploitée avec une charge de boue plus réduite, et pour laquelle la boue acheminée via le dispositif de déshydratation mécanique (55, 125) à la zone de traitement anaérobie (37, 109) est prélevée dans la zone de charge élevée (9).

5. Station d'épuration des eaux usées selon la revendication 3 ou 4, avec
des moyens de soutirage de la boue putréfiée depuis la zone de traitement anaérobie (37, 109) ;
un dispositif (49, 137) de déshydratation mécanique de la boue putréfiée et
des moyens pour l'acheminement du filtrat obtenu lors de la déshydratation de la boue putréfiée à au moins une zone de traitement aérobie (11, 13) alimentée par l'eau usée de la première alimentation (1, 101).

6. Station d'épuration des eaux usées selon l'une des revendications 3 à 5, pour laquelle, entre la deuxième alimentation (101) et la zone de traitement anaérobie (109) (réacteur de putréfaction), il est prévu une zone de précipitation (105, 110, 112, 113) pour la précipitation chimique de substances contenues dans l'eau usée, en particulier de métaux lourds.
